# EUROPEAN PATENT APPLICATION

(11) **EP 2 607 740 A2**
(43) Date of publication of application: **26.06.2013**
(21) Application number: 12195175.0
(22) Date of filing: 30.11.2012
(51) Int. Cl.: F16F 1/38

(54) **Anti-vibration device and assembly including such device**

(30) Priority: 22.12.2011 US 201113334939
(71) Applicant: HUTCHINSON, 75008 Paris (FR)
(72) Inventor: Coudiere, Franck, 45190 CRAVANT (FR); Desmoulins, Mickaël, 45310 VILLAMBLAIN (FR); Pellegrino, Allan, 28200 CHATEAUDUN (FR)
(74) Representative: Cabinet Plasseraud

(57) **Abstract**

Anti-vibration device including first and second strength members (2, 3) interconnected by an elastomer body (4), the first strength being made of molded plastic material and including an elastic clip (9) adapted to retain a conduit (10) by snap-fitting.

## Description

### FIELD OF THE INVENTION

The present invention relates to anti-vibration devices.

The invention concerns more particularly an anti-vibration device including at least first and second strength members interconnected by an elastomer body, at least the first strength being made at least partially of molded plastic material.

### BACKGROUND OF THE INVENTION

Document US-2010/0264570-A1 discloses an anti-vibration device of this type.

One particular object of the present invention is to improve anti-vibration devices of the above type.

### OBJECTS AND SUMMARY OF THE INVENTION

To this end, according to the invention, the first strength member further includes at least one clip of molded plastic material, which is adapted to retain a conduit thereon by snap-fitting. The conduit in question can be for instance a tube, a cable (e.g. electric cable, optic cable, mechanical transmission cable), or any other kind of conduit.

Thus, there is no need to assemble the clip to the first strength member or to the vehicle body, wich simplifies the assembling process and reduces the cost thereof. Further, the clip being in one single piece with the first strength member, it cannot be lost during the assembling process or transport of the anti-vibration device.

Various embodiments of the invention can optionally have further recourse to one and/or the other of the following features:
- the first strength member comprises a platform on which the elastomer body is fixed, and the clip includes:
- a substantially rigid casing extending laterally from said platform and defining at least one upwardly opening slot (in the normal position of use of the anti-vibration device) adapted to receive said conduit;
- and at least one elastic tab protruding inwardly relative to said slot and adapted to retain said conduit by snap-fitting, said casing surrounding said elastic tab so as to protect it, thus avoiding said elastic tab to be broken during the assembling process or transport;
- said casing includes:
- two substantially parallel side walls extending laterally from the platform each forming one upwardly open slot;
- substantially parallel front and back walls which join the two side walls together, the back wall being closer to the platform than the front wall;
   said side walls, front wall and back wall being substantially perpendicular to the platform and surrounding said at least one elastic tab, the clip being adapted to be unmolded in one single movement (the molding of the clip with the platform thus implies no added complexity in the molding process and very low added cost compared to the molding of te platform alone);
- said at least one elastic tab joins the two side walls together and extends substantially parallel to said front and back walls, one of said front and back walls being positionned for limiting deformation of said elastic tongue;
- the clip includes two elastic tongues facing each other;
- said elastic tab includes a central locking member protruding inwardly relative to said slots and two elastically deformable portions each having a shape of an inverted U, each elastically deformable portion having:
- a first branch extending upwardly from one of the side walls up to an upper end;
- a second branch extending upwardly from said central locking member up to an upper end;
- and a top portion joining the upper ends of the first and second branches together;
- said front and back walls each have an upper portion, the upper portions of said front and back walls including respectively two upper guide members protruding inwardly toward each other and adapted to guide said conduit toward said slot when the conduit is inserterd in the clip;
- said front and back walls each have an upper portion, the upper portions of said front and back walls including respectively two pairs of lateral guide members, the lateral guide members of each pair protruding inwardly toward each other substantially above the side walls of the casing and being adapted to guide said conduit toward said slot when the conduit is inserterd in the clip;
- the first strength member includes two clips, the slots of which are in mutual alignment from one clip to the other.

The invention further relates to an assembly including an anti-vibration device as defined above and a conduit (tube, cable or similar) snap fitted to the at least one clip of the first strenth member.

### BRIEF DESCRIPTION OF THE DRAWINGS

Other features and advantages of the invention will become apparent in the course of the following description of one embodiment thereof given by way of nonlimiting example with reference to the appended drawings.

In the drawings:
- figures 1 and 2 are perspective views, viewed respectively from above and from below, of an example of anti-vibration device according to one embodiment of the the invention,
- figure 3 is an exploded view in perspective of the anti-vibration device of figures 1 and 2,
- figure 4 is an enlarged perspective view showing one of the elastic clips of the anti-vibration device,
- figures 5 and 6 are respectively top and bottom views of the clip of figure 3, and
- figures 7 and 8 are section views of the clip, the sections being made accordng to lines VII-VII and VIII-VIII of figure 5.

### MORE DETAILED DESCRIPTION

In the various figures, the same references designate identical or similar elements.

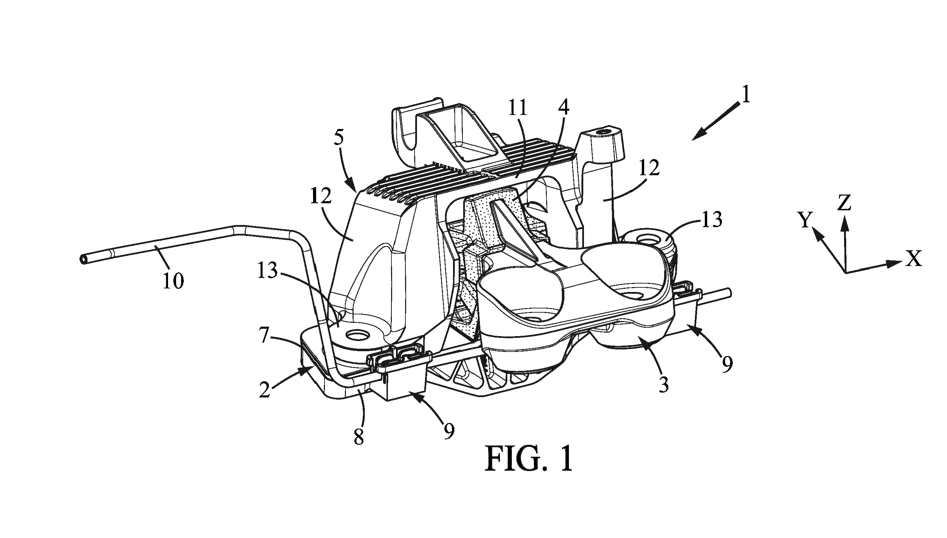

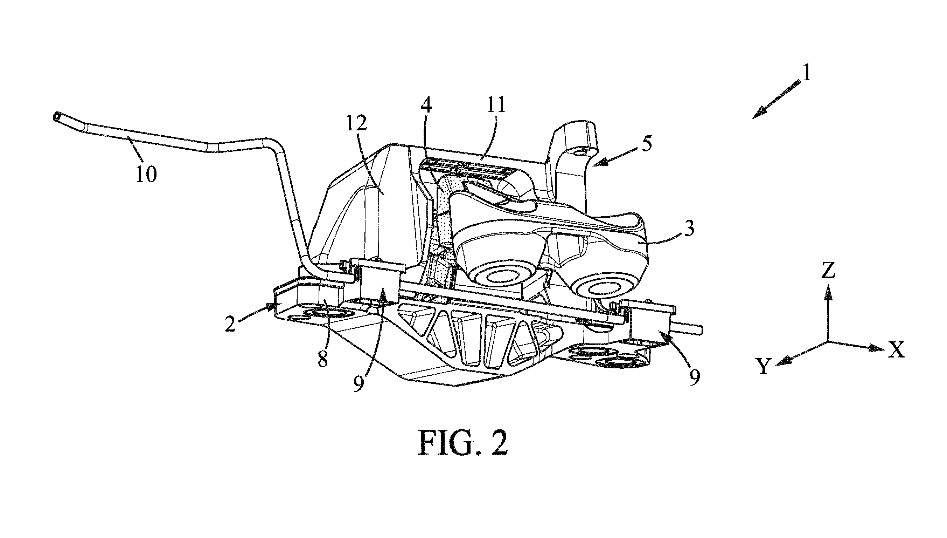

Figures 1 and 2 represent an anti-vibration device 1 that is adapted to connect:
- on the one hand, a first rigid element, for example the body of a vehicle (not shown), and
- on the other hand, a second rigid element, for example the engine of the vehicle (not shown).

The anti-vibration device 1 includes at least first and second strength members 2, 3 interconnected by an elastomer body 4.

In the example shown, the first strength member 2, which is designed to be fixed to the vehicle body, is a plastic part molded in one piece by injection molding, whereas the second strength member, which is designed to be fixed to the vehicle engine, is usually a metal part, for instance a part molded or casted in light alloy.

The upper face of the first strength member may also bear a limiter 5 fixed thereon. For instance, the limiter may have a substantially inverted U shape and may thus include:
- a substantially horizontal bridge portion 11 covering the elastomer body 4 and the second strength member 3;
- two substantially vertical legs 12 on both sides of the bridge portion 11;
- and two lugs 13 bearing on the upper face of the platform 6 and being abale to be fixed thereon by screws (not shown) which also fix the first strength member to the vehicle body.

The first strength member includes at least one clip 9, for instance two clips 9 in the example shown, which are molded in plastic material as one single piece with the first strength member 2, and which are adapted to retain a conduit 10 thereon by snap-fitting. The conduit in question can be for instance a tube, a cable (e.g. electric cable, optic cable, mechanical transmission cable), or any other kind of conduit.

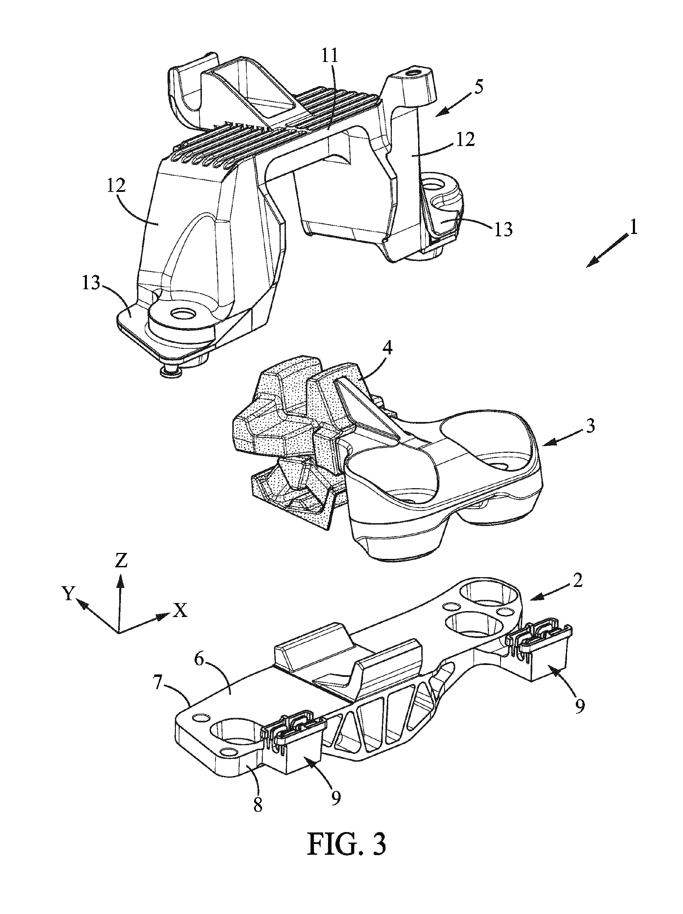

As shown for instance on figure 3, the first strength member 2 may comprise a rigid platform 6 which is substantially horizontal in use (ie substantially parallel to a plane XY, where X and Y are two mutually perpendicular axes). On the upper face of this platform 6 are fixed the elastomer body 4 and the limiter 5. The platform 6 may include two sbstantially parallel longer edges 7, 8, and the clips may extend laterally from the edge 8, thus not interfering with the fixation od the elastomer body 4 and limiter 5.

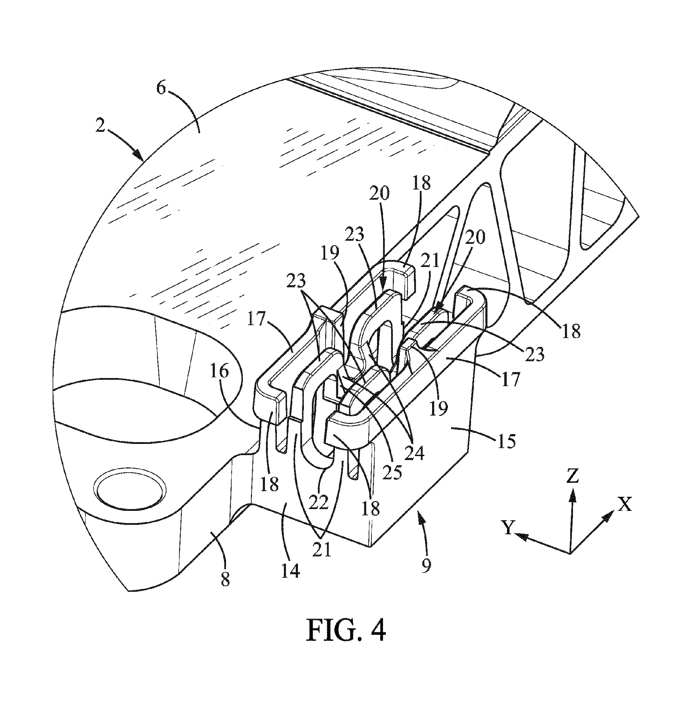

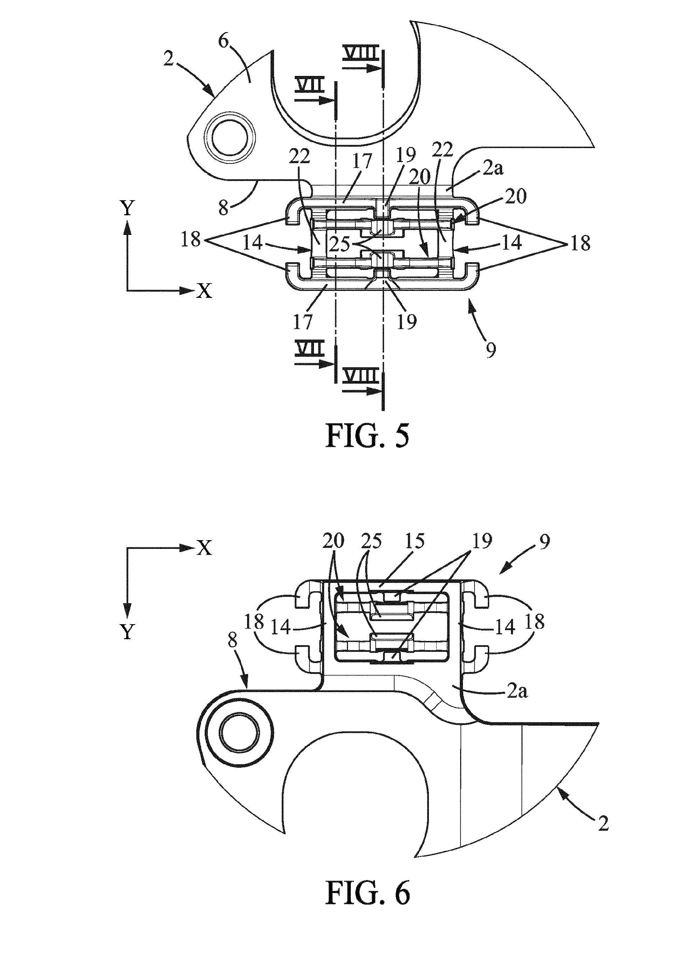

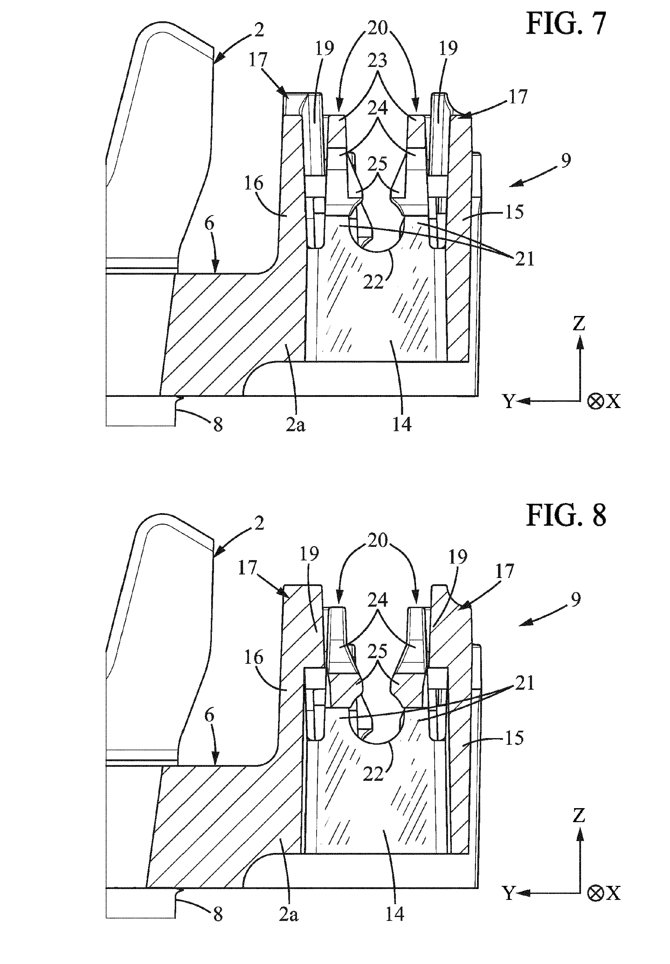

As shown in more details in figures 4-8, each clip 9 may include:
- a substantially rigid casing 14-16 extending laterally from said platform and defining at least one and preferably two upwardly opening slots 22 adapted to receive said conduit 10;
- and at least one elastic tab 20, preferably two mutually opposed tabs 20, protruding inwardly relative to said slots 22 and adapted to retain said conduit 10 by snap-fitting, said casing surrounding said elastic tab so as to protect it, thus avoiding said elastic tab 20 to be broken during the assembling process or transport.

In the example shown, the casing includes:
- two substantially parallel side walls 14 extending laterally from the platform 6 in a substantially vertical plane YZ (where Z is a vertical axis) and each forming one of the upwardly open slots 22;
- substantially parallel front and back walls 15, 16 which join the two side walls 14 together and extend in a substantially vertical plane XZ, the back wall 16 being closer to the platform 6 than the front wall 15.

Each elastic tab 20 joins the two side walls 14 together and extends substantially parallel to said front and back walls 15, 16, said front and back walls 15, 16 being positionned for limiting deformation of said elastic tongues 20 during snap-fitting.

In the example shown, each said elastic tab 20 includes a central locking member 25 protruding inwardly relative to said slots 22 for snap fitting with the conduit 10, and two elastically deformable portions each having a shape of an inverted U, each elastically deformable portion having:
- a first branch 21 extending upwardly from one of the side walls 14 up to an upper end (the slot 22 of each side wall 14 is thus defined between the two branches 21 extending therefrom);
- a second branch 24 extending upwardly from said central locking member 25 up to an upper end;
- and a top portion 23 joining the upper ends of the first and second branches 21, 24 together.

The front and back walls 15, 16 may each have a thickened upper portion 17 forming the upper edged of said walls. The upper portions 17 of the front and back walls 15, 16 include respectively two upper guide members 19 protruding inwardly toward each other above the locking members 25 of the elastic tongues 20 and adapted to guide the conduit 10 toward the slots 22 when the conduit 10 is inserterd in the clip 9. Similarly, the upper portions 17 of said front and back walls 15, 16 may include respectively two pairs of lateral guide members 18, the lateral guide members 18 of each pair protruding inwardly toward each other near the side walls 14 of the casing and being adapted to guide the conduit 10 toward the slots 22 when the conduit is inserterd in the clip.

The clips 9 are adapted to be unmolded in one single movement when unmolding the first strength member, so that the molding of the clip with the platform implies no added complexity in the molding process and very low added cost compared to the molding of te platform alone.

## Claims

1. Anti-vibration device including at least first and second strength members (2, 3) interconnected by an elastomer body (4), at least the first strength member (2) being made at least partially of molded plastic material, wherein the first strength member (2) further includes at least one clip (9) of molded plastic material, which is adapted to retain a conduit thereon by snap-fitting.

2. Anti-vibration device according to claim 1, wherein the first strength member comprises a platform (6) on which the elastomer body is fixed, and the clip includes:
- a substantially rigid casing (14-16) extending laterally from said platform (6) and defining at least one upwardly opening slot (22) adapted to receive said conduit;
- and at least one elastic tab (20) protruding inwardly relative to said slot (22) and adapted to retain said conduit by snap-fitting, said casing (14-16) surrounding said elastic tab so as to protect said elastic tab.

3. Anti-vibration device according to claim 2, wherein said casing (14-16) includes:
- two substantially parallel side walls (14) extending laterally from the platform (6) each forming one upwardly open slot (22);
- substantially parallel front and back walls (15, 16) which join the two side walls (14) together, the back wall (16) being closer to the platform (6) than the front wall (15); said side walls (14), front wall (15) and back wall (16) being substantially perpendicular to the platform (6) and surrounding said at least one elastic tab (20), the clip being adapted to be unmolded in one single movement.

4. Anti-vibration device according to claim 3, wherein said at least one elastic tab (20) joins the two side walls (14) together and extends substantially parallel to said front and back walls (15, 16), one of said front and back walls being positionned for limiting deformation of said elastic tab.

5. Anti-vibration device according to claim 3 or claim 4, wherein the clip includes two elastic tabs facing each other

6. Anti-vibration device according to anyone of claims 3-5, wherein said elastic tab (20) includes a central locking member (25) protruding inwardly relative to said slots (22) and two elastically deformable portions each having a shape of an inverted U, each elastically deformable portion having:
- a first branch (21) extending upwardly from one of the side walls (14) up to an upper end;
- a second branch (24) extending upwardly from said central locking member up to an upper end;
- and a top portion (23) joining the upper ends of the first and second branches together.

7. Anti-vibration device according to anyone of claims 3-6, wherein said front and back walls (15, 16) each have an upper portion (17), the upper portions of said front and back walls including respectively two upper guide members (19) protruding inwardly toward each other and adapted to guide said conduit toward said slot (22) when the conduit is inserterd in the clip.

8. Anti-vibration device according to anyone of claims 3-7, wherein said front and back walls (15, 16) each have an upper portion (17), the upper portions of said front and back walls including respectively two pairs of lateral guide members (19), the lateral guide members of each pair protruding inwardly toward each other near the side walls of the casing and being adapted to guide said conduit toward said slot when the conduit is inserterd in the clip.

9. Anti-vibration device according to anyone of claims 1-8, wherein the first strength member includes two clips (9), the slots (22) of which are in mutual alignment from one clip to the other.

10. Assembly including an anti-vibration device (1) according to anyone of claims 1-9 and a conduit (10) snap-fitted to the at least one clip (9) of the first strenth member (2).
